# EUROPEAN PATENT APPLICATION

(11) **EP 4 564 540 A1**
(43) Date of publication of application: **04.06.2025**
(21) Application number: 23307121.6
(22) Date of filing: 01.12.2023
(51) Int. Cl.: H01M 50/103, H01M 50/15, H01M 50/342

(54) **ENERGY STORAGE CELL COMPRISING A PRECUT VENTING MEMBRANE**

(71) Applicant: Automotive Cells Company SE, 33520 Bruges (FR)
(72) Inventor: CHOI, Hangjune, 33200 BORDEAUX (FR)
(74) Representative: Lavoix

(57) **Abstract**

The invention concerns an energy storage cell comprising a can comprising a venting membrane (40) laid across a pass-through venting window, the venting membrane (40) comprising a precut pattern (47, 48) allowing the venting membrane (40) to deform between a closing position wherein the venting membrane (40) sealingly closes the venting window, and an opened position wherein the venting membrane (40) allows the passage of gas.

The precut pattern (47, 48) defines a convex movable flap (59, 60) on one side, and a concave complementary panel (61, 62) on the other side, the convex movable flap being movable with respect to the concave complementary panel so as to form an opening (70, 71) extending slightly perpendicular to an initial plane of the venting membrane (40), in the opened position of the venting membrane.

## Description

The present invention concerns an energy storage cell of the type comprising:
- a can defining a closed internal volume, and comprising a pass-through venting window allowing the passage of gas from the closed internal volume, the pass-through venting window being formed in a venting face of the can,
- a stack of electrodes enclosed in the closed internal volume,
- a venting membrane laid across the pass-through venting window, the venting membrane comprising a precut pattern allowing the venting membrane to deform between a closing position wherein the venting membrane extends on an initial plane and sealingly closes the venting window, and an opened position wherein the venting membrane is ripped and allows the passage of gas.

An energy storage cell is an assembly that enables electrical energy to be converted into chemical energy and then stored. It comprises a set of multiple electrode sheets stacked and immersed in an electrolyte.

In order to ensure the safety of the cell during operation, it is known to use a pressure-accommodating mean for avoiding cell explosion caused by abnormal increase in the internal pressure.

Indeed, the formation and/or expansion of gases produced during operation may increase the internal pressure of the cell. If the internal pressure reaches a critical point by any chance, it can cause the cell to explode. To avoid explosion of the cell, a slightly deformable and tearable leak-tight venting membrane is used across a venting window of the cell.

In some cases, the internal pressure inside the cell increases to a point where the accommodation in changes in pressure provided by the deformation of the venting membrane is not sufficient to protect the cell and to avoid its subsequent explosion.

To this end, the venting membrane comprises a precut pattern, delimiting a region of the venting membrane where the mechanical properties are inferior. When the pressure increases significantly, the venting membrane tends to rip along the precut pattern causing the membrane to open, and the gases are ejected from the internal volume of the cell through the opened venting membrane. The remaining elements of the cell are therefore protected.

The precut pattern is commonly found in the literature as a central double Y line, allowing the venting membrane to open in two opposite flaps. This line is straight and is extended by two diverging segments at each end. The gases are thus allowed to escape the cell perpendicularly to the venting window, through an opening defined between the two ripped edges, which is parallel to the initial plan of the venting member.

However, an energy storage cell is commonly used with several other energy storage cells, forming together an energy storage cell pack or module closed by a cover.

The cover is located around the cells and in particular above the venting window. Therefore, after the opening of the membrane, the ripped edges are pressed against the cover. The cover forms thus an obstacle to the circulation of the gases escaping the cell in case of tearing of the venting membrane.

The gases struggle to escape the cell, slowing down the depressurization process of the cell. If the gases are not ejected quickly enough, the cell can explode anyway and the venting membrane fails to protect the cell.

One aim of the invention is therefore to propose a better protection of the cell in case of high internal pressure by allowing a better escape of the gases from the storage cell.

To this aim, the energy storage cell is characterized in that the precut pattern defines a convex movable flap on one side, and a concave complementary panel on the other side, the convex movable flap being movable with respect to the concave complementary panel so as to form an opening between ripped edges of the convex movable flap and the concave complementary panel in the opened position of the venting membrane, the opening extending slightly perpendicular to the initial plane of the venting membrane.

When the internal pressure becomes too high, the venting membrane deforms until being ripped in the region of the precut pattern. At this point, the convex movable flap together with the concave complementary panel forms an opening for the gases circulation which is slightly perpendicular to the cover and which is thus not closed by the cover.

Therefore, the gases are ejected from the cell through the opening in a direction slightly parallel to the venting window. The cover is therefore not on the circulating path of the ejected gases anymore and does not slow down the depressurization process. Therefore, the cell is better protected in case of high internal pressure conditions.

In particular embodiments, the energy storage cell according to the invention comprises one or more of the following features, taken alone or in any technically possible combination:
- the precut pattern is a convex line located in the vicinity of a longitudinal edge of the venting membrane, the area defined by the convex movable flap being strictly greater than the area defined by the concave complementary panel;
- the precut pattern is a sensibly U-shaped line;
- the precut pattern comprises a curved portion extending the U-shaped line towards the centre of the venting membrane;
- the venting membrane comprises two interlocked precut patterns, the first precut pattern defining a first convex movable flap, the second precut pattern defining a second convex movable flap connected to the first convex movable flap;
- the two interlocked precut patterns are sensibly two interlocked U-shaped lines, the first precut pattern being turned toward a first longitudinal edge of the venting membrane, the second precut pattern being turned toward a second longitudinal edge of the venting membrane, opposite the first longitudinal edge, the first precut pattern and the second precut pattern being curved in opposite direction;
- the two precut patterns are interlocked in such a way that more than 60% of the area of the first movable flap is shared with the area of the second movable flap;
- the two precut patterns are interlocked in such a way that the area of a venting region, delimited by the common area of the first convex movable flap and the second convex movable flap, is comprised between 60% and 98% of the total area of the venting membrane; and
- in the opened position, the convex movable flap is a central region of the venting membrane, at least an extremity region of the convex movable flap extending slightly parallel to the initial plane of the venting membrane.

According to a second aspect, the invention concerns an energy storage cell pack or module comprising an array of energy storage cells as described above, and a cover facing the venting face of each energy storage cell.

The invention will be better understood by reading the following description, given solely by way of example, and made with reference to the appended drawings, in which:
- [Fig.1] Figure 1 is a perspective view of an energy storage cell,
- [Fig.2] Figure 2 is an exploded view of the energy storage cell of Figure 1,
- [Fig.3] Figure 3 is a cross-sectional partial view along plane V-V perpendicular to the venting face of the energy storage cell of Figure 1, the venting membrane being in the closing position,
- [Fig.4] Figure 4 is a perspective view zoomed on the venting membrane of the energy storage cell of Figure 1, the venting membrane being in a closing position,
- [Fig.5] Figure 5 is a perspective view of the venting membrane of Figure 4, the venting membrane being in an opened position, and
- [Fig.6] Figure 6 is a cross-sectional partial view along plane V-V of the energy storage cell of Figure 1, the venting membrane being in the opened position.

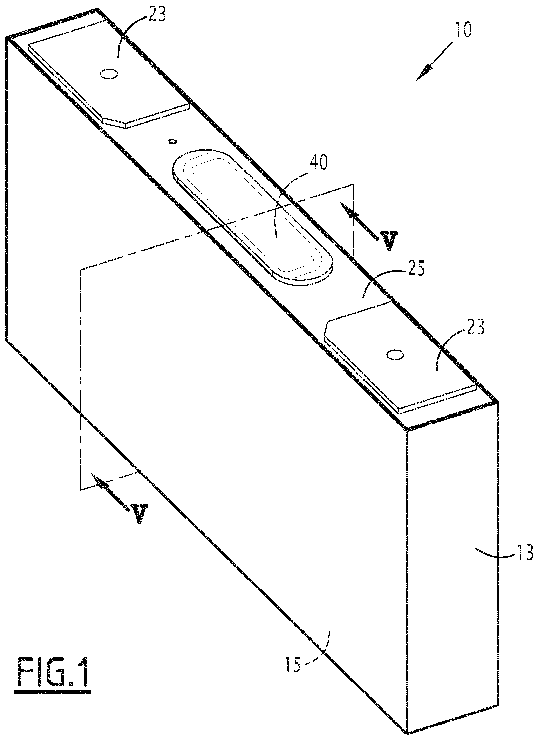

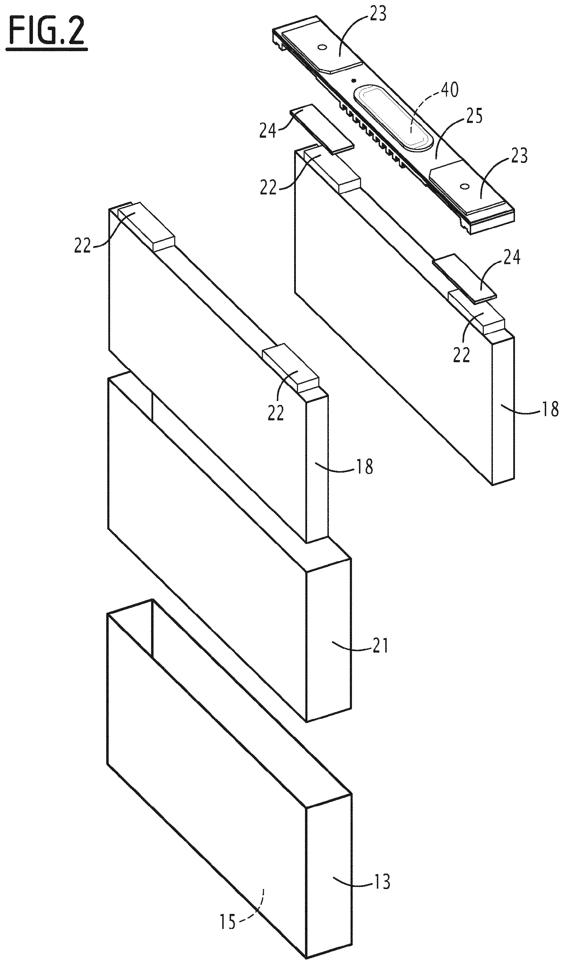

The energy storage cell 10 shown in Figures 1 and 2 comprises a can 13 defining a closed internal volume 15. The can 13 is for example a metallic parallelepipedal case.

The energy storage cell 10 comprises two stacks of electrodes 18 enclosed in the closed internal volume 15.

Before operation of the energy storage cell 10, the can 13 is filled with an electrolyte in which the stacks of electrodes 18 are immersed.

As can be seen in Figure 2, the stacks of electrodes 18 are parallelepipedal in shape and are completely enclosed for electrical insulation by a protective envelope 21.

Each energy storage cell 10 comprises connection tabs 22 connecting together the electrodes of the same polarity. The connection tabs 22 are electrically connected to respective outer connection terminals 23 through collectors 24.

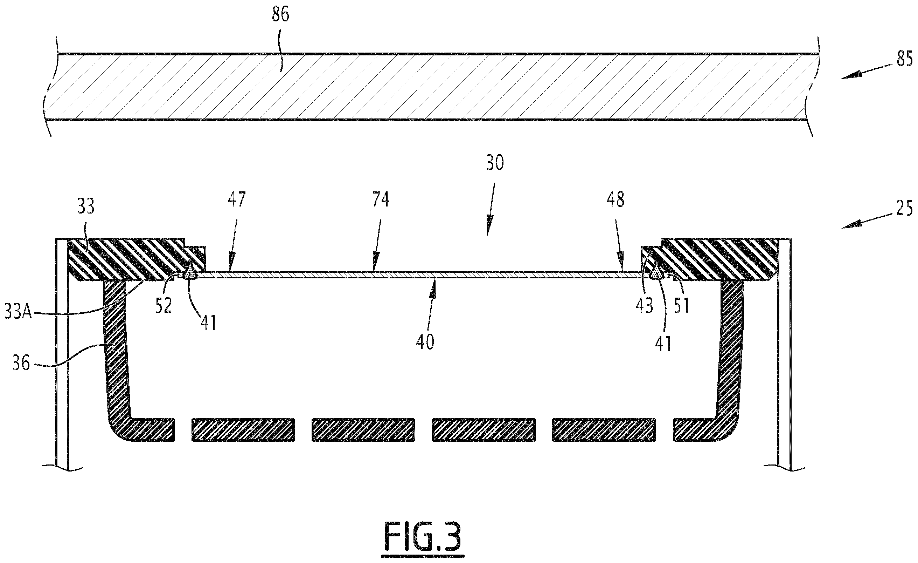

The can 13 comprises a venting face 25 on which the terminals 23 are exposed. An oblong pass-through venting window 30, represented in Figure 3, allowing the passage of gas from the closed internal volume 15 is defined in the venting face 25.

In the example illustrated in Figures 1 and 2, the venting face 25 is the top face of the can 13. However, the venting face 25 could also be a lateral face, or a bottom face of the can 13.

The venting face 25 comprises an external layer 33 superimposed with an internal layer 36, as shown in Figure 3.

In this configuration, the pass-through venting window 30 extends across both the external layer 33 and the internal layer 36.

The pass-through venting window 30 allows the passage of gas and electrolytes from the internal volume 15 of the can 13 towards the outside of the energy storage cell 10.

The energy storage cell 10 comprises a venting membrane 40 laid across the pass-through venting window 30. The venting membrane 40 has an oblong outline.

The venting membrane 40 is leak-tight. For example, the venting membrane 40 is a sheet of aluminum, having a thickness comprised between 0.2 mm and 0.5 mm.

The venting membrane 40 is welded around the perimeter of the pass-through venting window 30, and sealingly closes the pass-through venting window 30.

The venting membrane 40 is for example welded on an inner face of the can 13.

In the example illustrated in Figure 3, the venting membrane 40 is fixed to the external layer 33 of the venting face 25.

In particular, the venting membrane 40 is welded on an inner face 33A of the external layer 33 of the venting face 25 by a weld 41.

The external layer 33 of the venting face 25 comprises a peripheral shoulder 43 with reduced thickness around the pass-through venting window 30. The peripheral shoulder 43 extends along the entire perimeter of the pass-through venting window 30.

The venting membrane 40 is welded on the inner side of the peripheral shoulder 43.

The venting membrane 40 is slightly deformable.

By "slightly deformable" it is meant that the venting membrane 40 is able to be deflected in a concave manner towards the inside of the cell 10 in response to a low-pressure condition inside the cell 10 and/or a high-pressure condition outside the cell 10. Similarly, the venting membrane 40 is able to be deflected in a convex manner towards the outside of the cell 10 in response to a high-pressure condition inside the cell 10 and/or a low-pressure condition outside the cell 10.

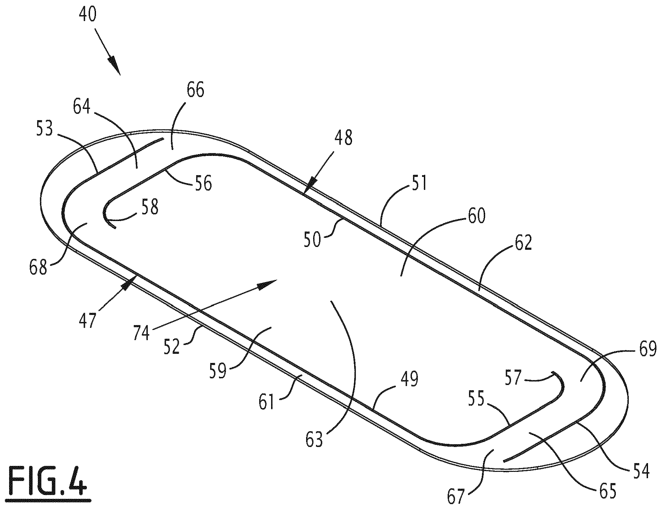

With reference to Figure 4, the venting membrane 40 comprises two precut patterns 47, 48 allowing the venting membrane 40 to deform between a closing position wherein the venting membrane 40 extends on an initial plane and sealingly closes the venting window 30, and an opened position wherein the venting membrane 40 is ripped and allows the passage of gas.

The initial plane corresponds to the plane onto which the venting membrane 40 lays when the venting membrane 40 is in the closing position.

A precut pattern is for example a region of the venting membrane 40 where the thickness is reduced. Therefore, when the venting membrane 40 faces a high internal pressure and tends to deform consequently, the region of the precut patterns 47, 48, being mechanically less resistant, will rip and the venting membrane 40 will open according to the precut patterns.

For example, the thickness of the venting membrane 40 in the regions of the precut patterns 47, 48 is roughly comprised between about 40% and 70% of the thickness of the venting membrane 40 away from the precut patterns 47, 48.

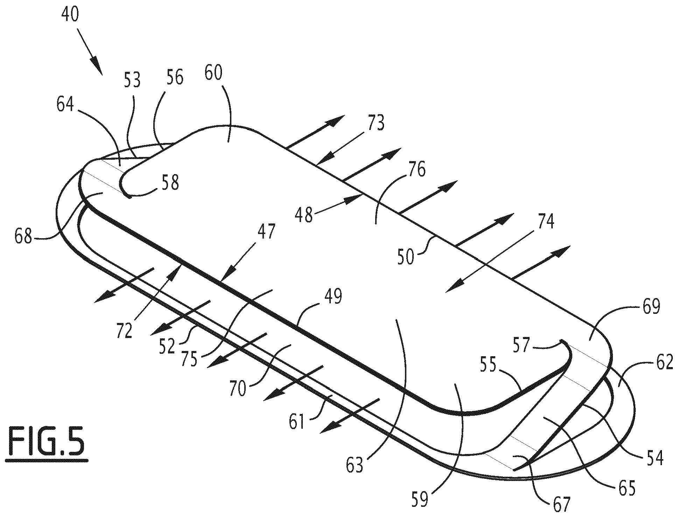

In the example of Figures 4 and 5, each precut pattern 47, 48 is a convex line, more particularly each precut pattern 47, 48 is a sensibly U-shaped line.

Each U-shaped line respectively comprises a median section 49, 50 parallel to longitudinal edges 51, 52 of the venting membrane 40 and two lateral sections 53, 54, 55, 56 on either side of the median section 49, 50. The lateral sections 53, 54, 55, 56 extend from one longitudinal edge 51, 52 to the other, and extend parallel to each other.

Advantageously, the median sections 49, 50 have substantially the same length, and the lateral sections 53, 54, 55, 56 have substantially the same length as well.

The median part 49, 50 of each precut pattern 47, 48 is respectively located in the vicinity of a longitudinal edge 51, 52 of the venting membrane 40.

The lengths of the median sections 49, 50 and the lateral sections 53, 54, 55, 56 are more than 70% of the length and the width of the membrane, respectively.

As it can be seen in Figure 4, the two precut patterns 47, 48 are interlocked, in such a way that the U-shaped line of a first precut pattern 47 and the U-shaped line of a second precut pattern 48 are curved in opposite directions.

In other words, each precut pattern 47, 48 comprises an outer lateral section 53, 54 being outside the U-shaped line formed by the other precut pattern 48, 47, and an inner lateral section 55, 56 being inside the U-shaped line formed by the other precut pattern 48, 47.

Moreover, each precut pattern 47, 48 comprises a curved portion 57, 58 extending the U-shaped lines towards the centre of the venting membrane 40.

Advantageously, the curved portions 57, 58 extend the respective inner lateral sections 55, 56 towards the centre of the venting membrane 40.

Each precut pattern 47, 48 defines respectively a convex movable flap 59, 60 on one side, and a concave complementary panel 61, 62 on the other side.

Regarding each convex movable flap 59, 60 independently from the other, the area defined by each convex movable flap 59, 60 is strictly greater than the area defined by the respective concave complementary panel 61, 62.

Moreover, the two precut patterns 47, 48, are interlocked in such a way that more than 60% of the area of the first movable flap 59 is shared with the area of the second movable flap 60. The shared area between each movable flap 59, 60 is commonly defined in what follows as a venting region 63.

In the open position of the venting membrane 40, as shown in Figure 5, the shared portion of the convex movable flaps 59, 60 delimits the venting region 63, the venting region 63 being moved away from the complementary panels 61, 62, while the unshared portions of the convex movable flaps 59, 60 delimit two partially movable legs 64, 65.

The partially movable legs 64, 65 allow the venting region 63 to be displaced from the initial plane of the venting membrane 40 in order to allow gas circulation, while maintaining the venting region 63 connected to the fixed part of the venting membrane 40.

In particular, the portion of the first convex movable flap 59 which is not shared with the second convex movable flap 60 delimits a first partially movable leg 64.

Similarly, the portion of the second convex movable flap 60 which is not shared with the first convex movable flap 59 delimits a second partially movable leg 65.

Each partially movable leg 64, 65 is partially movable with respect to a fixed portion of the venting membrane 40. The fixed portion of the venting membrane 40 is defined as the shared area by the two complementary panels 61, 62.

In other words, each partially movable leg 64, 65 comprises a first extremity 66, 67 connected to the fixed portion of the venting membrane 40, and a second extremity 68, 69 connected to the venting region 63.

Each partially movable leg 64, 65 has a rectangular outline between the first extremity 66, 67 and the second extremity 68, 69.

While the first extremities 66, 67 remain fixed with the fixed portion of the venting membrane 40 in every configuration, the second extremities 68, 69 are moved away from the fixed portion of the venting membrane 40 in the open position of the venting membrane 40.

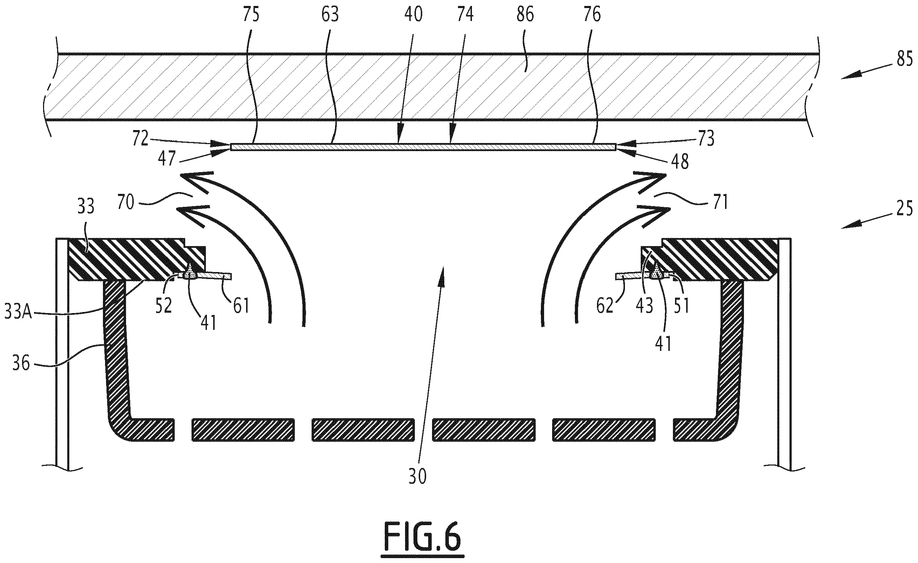

As it can be seen in Figures 5 and 6, the movable flaps 59, 60 are movable with respect to the respective concave complementary panels 61, 62, so as to form openings 70, 71 between ripped edges 72, 73 of the convex movable flaps 59, 60 and the concave complementary panels 61, 62 in the opened position of the venting membrane 40.

In the opened position, the convex movable flaps 59, 60 form a central region 74 of the venting membrane 40, and at least an extremity region 75, 76 of each convex movable flaps 59, 60 extends slightly parallel to the initial plane of the venting membrane 40.

Due to the above-mentioned features, the openings 70, 71 extend slightly perpendicular to the initial plane of the venting membrane 40.

Furthermore, due to the configuration of the precut patterns 47, 48, the two openings 70, 71 communicate and form one large passage for the gas circulation, illustrated by the arrows in Figures 5 and 6.

The area of the venting region 63, delimited by the common area of the first convex movable flap 59 and the second convex movable flap 60 as previously mentioned, is comprised between about 60% and 98% of the total area of the venting membrane 40.

Such a percentage means that a major part of the venting membrane 40 is moved away from the initial plane of the venting membrane 40 in case of tearing of the venting membrane 40 along the precut patterns 47, 48 in response to an increase in pressure inside the cell 10. In consequence, when the venting membrane 40 rips, the gases can escape the cell 10 quite easily, as a big part of the venting membrane 40, namely the venting region 63, is displaced and defines a large opening for the gases circulation.

In particular, in the opened configuration, the venting region 63 extends away and parallel to the initial plane of the venting membrane 40.

Therefore, thanks to the specific direction of elongation of the openings 70, 71 and thanks to the venting region 63 extending parallel to the initial plane of the venting membrane 40, the gases ejected from the cell 10 cannot exit the cell 10 perpendicularly to the initial plane of the venting membrane 40. They are thus ejected almost parallel to the initial plane of the venting membrane 40, as illustrated in Figures 5 and 6.

This feature allows a rapid depressurization of the cell 10 in case of high internal pressure conditions.

Indeed, the energy storage cell 10 is commonly used in an energy storage cell pack or module comprising an array of energy storage cells 10. The energy storage cell pack or module comprises a cover 85 holding the energy storage cells 10 together within said pack or module.

With reference to Figures 3 and 6, a vent side 86 of the cover 85 faces the venting face 25 of each energy storage cell 10.

As previously mentioned, thanks to the configuration of the precut patterns 47, 48, when the internal pressure becomes too high and the venting membrane 40 has to rip, the gases are ejected from the cell 10 almost parallel to the initial plane of the venting membrane 40, that is to say almost parallel to the vent side 86 of the cover 85.

Therefore, the vent side 86 does not impede the gases to be ejected from the cell 10 during the depressurization process.

The pressure inside the cell 10 is quickly released, and an explosion of the energy storage cell 10 is avoided.

The venting membrane according to the invention allows then an optimal protection of the energy storage cell 10, and in particular of an energy storage cell pack or module, even in case of high internal pressure conditions inside the cells.

### Reference list:

10: energy storage cell
13: can
15: closed internal volume
18: stack of electrodes
21: envelope
22: tab
23: terminal
24: collector
25: venting face
30: venting window
33: external layer
33A: inner face of the external layer
36: internal layer
40: venting membrane
41: weld
43: peripheral shoulder
47: first precut pattern
48: second precut pattern
49: median section of the first precut pattern
50: median section of the second precut pattern
51: first longitudinal edge of the venting membrane
52: second longitudinal edge of the venting membrane
53: outer lateral section of the first precut pattern
54: outer lateral section of the second precut pattern
55: inner lateral section of the first precut pattern
56: inner lateral section of the second precut pattern
57, 58: curved portion of the precut patterns
59: first convex movable flap
60: second convex movable flap
61: first concave complementary panel
62: second concave complementary panel
63: venting region
64: first partially movable leg
65: second partially movable leg
66: first extremity of the first partially movable leg
67: first extremity of the second partially movable leg
68: second extremity of the first partially movable leg
69: second extremity of the second partially movable leg
70, 71: openings
72, 73: ripped edges
74: central region
75, 76: extremity region of the movable flaps
85: cover
86: vent side of the cover

## Claims

1. Energy storage cell (10) comprising:
- a can (13) defining a closed internal volume (15), and comprising a pass-through venting window (30) allowing the passage of gas from the closed internal volume (15), the pass-through venting window (30) being formed in a venting face (25) of the can (13),
- a stack of electrodes (18) enclosed in the closed internal volume (15),
- a venting membrane (40) laid across the pass-through venting window (30), the venting membrane (40) comprising a precut pattern (47, 48) allowing the venting membrane (40) to deform between a closing position wherein the venting membrane (40) extends on an initial plane and sealingly closes the venting window (30), and an opened position wherein the venting membrane (40) is ripped and allows the passage of gas,
**characterized in that**, the precut pattern (47, 48) defines a convex movable flap (59, 60) on one side, and a concave complementary panel (61, 62) on the other side, the convex movable flap (59, 60) being movable with respect to the concave complementary panel (61, 62) so as to form an opening (70, 71) between ripped edges (72, 73) of the convex movable flap (59, 60) and the concave complementary panel (61, 62) in the opened position of the venting membrane (40), the opening (70, 71) extending slightly perpendicular to the initial plane of the venting membrane (40).

2. Energy storage cell (10) according to claim 1, wherein the precut pattern (47, 48) is a convex line located in the vicinity of a longitudinal edge (51, 52) of the venting membrane (40), the area defined by the convex movable flap (59, 60) being strictly greater than the area defined by the concave complementary panel (61, 62).

3. Energy storage cell (10) according to claim 1 or 2, wherein the precut pattern (47, 48) is a sensibly U-shaped line.

4. Energy storage cell (10) according to claim 3, wherein the precut pattern (47, 48) comprises a curved portion (57, 58) extending the U-shaped line towards the centre of the venting membrane (40).

5. Energy storage cell (10) according to any one of the preceding claims, wherein the venting membrane (40) comprises two interlocked precut patterns (47, 48), the first precut pattern (47) defining a first convex movable flap (59), the second precut pattern (48) defining a second convex movable flap (60) connected to the first convex movable flap (59).

6. Energy storage cell (10) according to claim 5, wherein the two interlocked precut patterns (47, 48) are sensibly two interlocked U-shaped lines, the first precut pattern (47) being turned toward a first longitudinal edge (51) of the venting membrane (40), the second precut pattern (48) being turned toward a second longitudinal edge (52) of the venting membrane (40), opposite the first longitudinal edge (51), the first precut pattern (47) and the second precut pattern (48) being curved in opposite direction.

7. Energy storage cell (10) according to claim 5 or 6, wherein the two precut patterns (47, 48) are interlocked in such a way that more than 60% of the area of the first movable flap (59) is shared with the area of the second movable flap (60).

8. Energy storage cell (10) according to any one of claims 5 to 7, wherein the two precut patterns (47, 48) are interlocked in such a way that the area of a venting region (63), delimited by the common area of the first convex movable flap (59) and the second convex movable flap (60), is comprised between 60% and 98% of the total area of the venting membrane (40).

9. Energy storage cell (10) according to any one of the preceding claims, wherein, in the opened position, the convex movable flap (59, 60) is a central region (74) of the venting membrane (40), at least an extremity region (75, 76) of the convex movable flap (59, 60) extending slightly parallel to the initial plane of the venting membrane (40).

10. Energy storage cell pack or module comprising an array of energy storage cells (10) according to any of the preceding claims, and a cover (85) facing the venting face (25) of each energy storage cell (10).
